Europäisches Patentamt

European Patent Office

Office européen des brevets

(11) Publication number: **0 189 905**
**B1**

(12) **EUROPEAN PATENT SPECIFICATION**

(45) Date of publication of patent specification: **04.04.90**

(21) Application number: **86101122.9**

(22) Date of filing: **28.01.86**

(51) Int. Cl.⁵: **G 11 B 7/26**

(54) **Method of manufacturing recording discs.**

(30) Priority: **29.01.85 JP 13470/85**

(43) Date of publication of application:
**06.08.86 Bulletin 86/32**

(45) Publication of the grant of the patent:
**04.04.90 Bulletin 90/14**

(84) Designated Contracting States:
**DE FR GB**

(56) References cited:
**DE-A-2 426 610**
**FR-A-2 306 496**
**GB-A-2 140 575**

**PATENTS ABSTRACTS OF JAPAN, vol. 6, no. 79**
**(P-115)957r, 18th May 1982; & JP - A - 57 15 235**

**PATENTS ABSTRACTS OF JAPAN, vol. 5, no.**
**118 (P-73)790r, 30th July 1981; & JP - A - 56 58**
**146**

**PATENTS ABSTRACTS OF JAPAN, vol. 9, no. 48**
**(P-338)1771r, 28th February 1985; & JP - A - 59**
**185 051**

(73) Proprietor: **VICTOR COMPANY OF JAPAN,**
**LIMITED**
**3-12, Moriya-cho**
**Kanagawa-ku Yokohama (JP)**

(72) Inventor: **Komatsubara, Shigemaru**
**1-6-17, Komachidoori**
**Sagamihara-shi Kanagawa-ken (JP)**

(74) Representative: **Grupe, Peter, Dipl.-Ing. et al**
**Patentanwaltsbüro Tiedtke-Bühling-Kinne-**
**Grupe-Pellmann-Grams-Struif Bavariaring 4**
**D-8000 München 2 (DE)**

(56) References cited:

**PATENTS ABSTRACTS OF JAPAN, vol. 9, no.**
**170 (P-373)1893r, 16th July 1985; & JP - A - 60 47**
**246**

Courier Press, Leamington Spa, England.

## Description

The present invention relates to a method of manufacturing data recording discs, and in particular to a method of manufacturing an optical playback type of recording disc.

In the prior art, data recording discs have been manufactured by methods such as injection molding or the 2P photo-polymer method. With such methods, a base disc is first formed, having necessary data recorded on one side thereof, i.e. as a patterned portion of the surface of that side. A material suitable for forming a reflective surfaces (i.e. having properties suitable for reflecting a light beam used to read data from the disc) is then coated on the copy face of the base disc containing the recorded data. However such a recording disc has a two-layer construction, i.e. a base disc and a recording medium layer formed thereon, and as a result, absorption of water vapor from the atmosphere can result in warping of the recording medium layer.

The JP—A—57 15 235 discloses the manufacture of members for optical information recording the reproduction. With this method an original disc provided with unevenness and a base material transmitting ultraviolet rays are piled across a spacer, and an ultraviolet-ray curing resin is injected and irradiated with ultraviolet rays from an ultraviolet-ray generation source via the base material to form a resin layer. After the original disc is peeled from the resin layer, tellurium or the like is deposited on the resin layer by a vacuum depositing method. Since the ultra-violet radiation is only directed onto one side of the resin layer the warping phenomenon described above occurs.

This warping phenomenon resulting from the effects of absorption of atmospheric moisture is a serious disadvantage of this prior art methods of manufacturing data recording discs.

As a measure for preventing such warping it has been proposed to bond a disc which is identical to the base disc, onto the recording medium layer, to thereby cancel the tendency to warp as a result of absorption of moisture. However, such bonding of an additional base disc will result in increased complexity of the manufacturing process for producing the data recording discs and difficulties with regard to quality control. Furthermore of such bonding means are employed, the thickness of each data recording disc is appreciably increased, so that the cost of material required to form each disc is increased. Furthermore, the weight of each disc is increased, and hence a greater amount of power must be applied to the drive equipment of the playback apparatus used with such discs.

It is an object of the present invention to provide a method of manufacturing data recording discs which overcomes the problems of prior art methods, as set out above.

This object is achieved by a method of manufacturing data recording discs according to the present invention which comprises the steps:

Depositing a specific amount of a hardening type of synthetic resin, in liquid form, upon a face of a master disc (1) having a surface pattern upon that face, the master disc (1) being transparent to a specific form of radiation energy; then sandwiching the synthetic resin between the master disc (1) and a flat plate (3), the flat plate (3) being transparent to the radiation energy and applying force acting on the flat plate, to form a thin layer (2) of the resin; performing hardening processing of the layer (2) of the synthetic resin on both sides thereof by exposing the sides to radiation energy (4, 5) passed through the master disc (1) and the flat plate (3) to thereby form the synthetic resin layer (2) into a base disc (6); separating the base disc (6) from the master disc (1) with the flat plate (3) remaining attached thereto and with the surface pattern copied upon a copy face of the base disc (6) from the master disc (1); forming a recording medium layer (9) of a material suitable for producing a reflective surface upon the copy face of the base disc (6); then a specific amount of the hardening type of synthetic resin, in liquid form, is deposited upon the recording medium layer (9) and a second flat plate (3') is placed upon the synthetic resin, the second flat plate (3') being transparent to the radiation energy, and force is applied to the second flat plate (3') to form the synthetic resin into a flat layer (2'); hardening processing of said synthetic resin layer (2') from both sides thereof is performed by exposing these sides to the radiation energy through the first flat plate (3) and the second flat plate (3'), to thereby form the synthetic resin into a protective layer (11) and so form a structure comprising the recording medium layer (9) sandwiched between the protective layer (11) and the base disc (6); the sandwich-configuration structure is then separated from the first and the second flat plates (3, 3'), and the sandwich-configuration structure is machined into a predetermined disc shape.

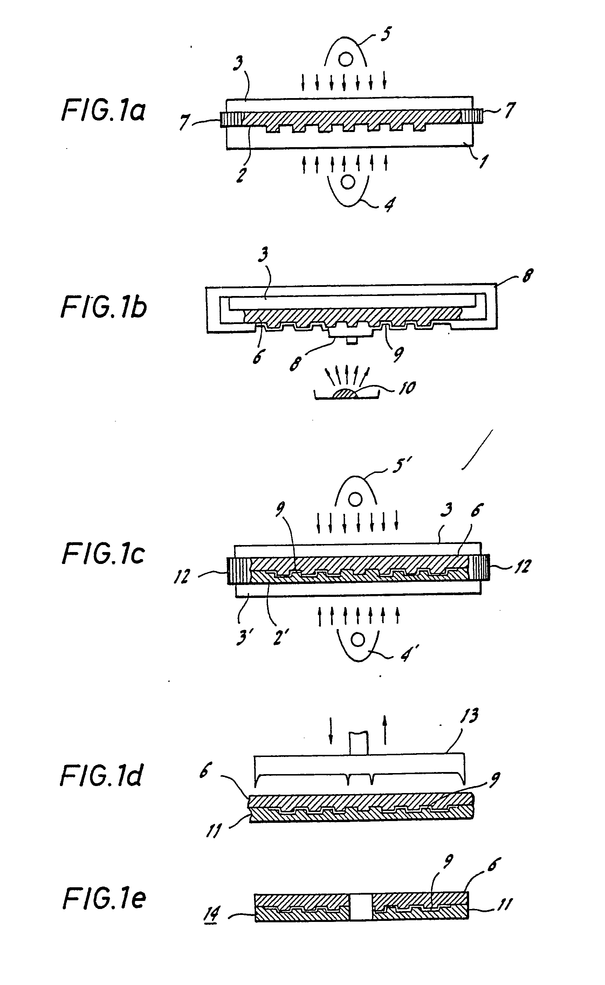

Fig. 1(a) to 1(e) are diagrams for assistance in describing steps in a method of manufacture of data recording discs according to the present invention.

Fig. 1(a) to 1(e) show steps of an example of a method of manufacturing data recording discs according to the present invention.

In a first step, illustrated in Fig. 1(a), a specific amount of an ultra-violet radiation hardening type of synthetic resin, in liquid form, is dropped onto the face of a master disc 1, forming a layer of the resin thereon. An example of a suitable resin is 2.2 bis[4-(acryloxy diethoxy)phenyl]propane. The master disc 1 is transparent to ultra-violet radiation, and has a surface pattern formed on that face. A flat plate 3, formed of a material transparent to ultra-violet radiation and having the opposing faces thereof shaped accurately flat and mutually parallel, is then placed, by being moved slowly downward, onto the synthetic resin that was dropped onto master disc 1. The flat plate 3 is preferably formed of a material such as quartz glass or acryl, etc. Care must be taken to place the flat plate 3 onto the synthetic resin in a gradual manner, so as to avoid the inclusion of air bubbles within the resin. Next, pressure is applied to the top face of the flat plate 3, by mechanical means acting through a pressure plate, for several seconds. This action serves to increase the accuracy of forming a base disc during this step. A layer of synthetic resin 2 is thereby formed, sandwiched between the flat plate 3 and the master disc 1. Ultra-violet radiation is then directed from below onto the master disc 1, from an ultra-violet radiation source 4, and is also directed from above onto the flat plate 3 from an ultra-violet radiation source 5, to thereby irradiate the layer of synthetic resin 2 uniformly on both sides thereof. The intensities of radiation applied to the upper and lower faces of the layer of synthetic resin 2 in this way are preferably made substantially identical, for example a radiation intensity of approximately 1 $Kw/cm^2$ as measured at the center of an irradiated face, applied for approximately 5 seconds. The synthetic resin layer 2 is thereby hardened by the ultra-violet radiation, to form a base disc 6. The thickness of the base disc 6 thus formed is determined by a spacer 7.

It is an important feature of the method of the present invention that the ultra-violet radiation is directed through both the master disc 1 and the flat plate 3, onto both sides of the resin layer 2. If the ultra-violet radiation were to be directed only onto one side, then the warping phenomenon described above, resulting from the effects of absorption of atmospheric moisture, would occur with the base disc 6. However with the method of the present invention as described, this warping of base disc 6 is effectively prevented.

Next, in the step shown in Fig. 6(b), the base disc 6 is separated from the master disc 1, and a masking cover 8 is attached to the base disc 6 with the flat plate 3 remaining attached thereto and with the surface pattern copied upon a copy face of the base disc from the master disc. The masking cover 8 is shaped such as to mask certain parts of the base disc 6. Generally speaking, these will be a peripheral portion and a central portion of base disc 6. A recording medium layer 9 is then formed on the copy face of the base disc 6 which has the recording data copied only on these portions of that face which are not masked by the masking cover 8. In the case of manufacturing an optical type of data recording disc, the material of the recording medium layer should be suitable for producing a reflective surface. The layer of recording medium material 9 is preferably formed by a thin-film deposition process, such as vacuum evaporative deposition, sputtering deposition, ion plating using PVD, etc. The source of the material of the recording medium layer utilized in this deposition process is denoted by reference numeral 10 in Fig. 1(b).

Next, as shown in Fig. 1(c), the base disc 6 with the recording medium layer 9 formed by the above thin-film deposition process thereon and having the flat plate 3 still attached thereto, is removed from the masking cover 8, and similar processing to that shown in Fig. 1(a) is repeated. That is to say, a specific quantity of ultra-violet radiation hardening type of synthetic resin, in liquid form, is dropped onto the surface of the recording medium layer 9, then a flat plate 3' which is precisely machined flat and is transparent to ultra-violet radiation, is placed upon the latter synthetic resin, and force applied to plate 3' to thereby form the layer of synthetic resin 2' shown in Fig. 1(c). Ultra-violet radiation is then directed from below, by an ultra-violet radiation source 4', through the flat plate 3', and is directed from above from an ultra-violet radiation source 5' through the flat plate 3, onto opposite sides of the synthetic resin layer 2'. In this way, the synthetic resin 2' is hardened to thereby form a protective layer 11. The thickness of the protective layer 11 is determined by a spacer 12.

Since portions of protective layer 11 and base disc 6 are in direct contact (as a result of the masking of portions of base disc 6 by masking cover 8 as described above prior to formation of layer 9) and are both formed of synthetic resin, the protective layer 11 and base disc 6 become mutually bonded with an extremely high value of attachment strength.

A structure has at this stage been formed, consisting of the recording medium layer 9 sandwiched between the protective layer 11 and the base disc 6. The flat plates 3 and 3' are now separated from this sandwich structure, which is then machined by a "doughnut cutter" type of cutting tool 13 as shown in Fig. 1(d), to remove central and peripheral portions of the structure and thereby establish the shape of the disc. The completed data recording disc 14 is thereby formed, as illustrated in Fig. 1(e).

Assuming that the diameter of the layer of synthetic resin 2 formed in the first step of the process described above is approximately 200 mm and the thickness thereof is approximately 100 µm, then the amount of synthetic resin required at this stage of the process, to form each recording disc, is approximately 3 milliliter. The amount of synthetic resin required to form the protective layer 11 will of course be substantially less than this, so that it can be understood that the method of the present invention enables data recording discs to be produced by utilizing extremely small amounts of material, so that manufacturing costs can be held at a low level.

A data recording disc manufactured by the process described above can have a thickness of approximately 50 to 200 µm. However as described above, in spite of this extreme thinness, negligible deformation of such a disc will occur as a result of absorption of atmospheric moisture, so that the warping phenomenon described above will not occur. Thus, in addition to the above process being an extremely efficient method of manufacturing data recording discs, the process makes it unnecessary to perform bonding of an additional base disc onto the recording medium layer, as proposed in the prior art in order to overcome this problem of warping, as described hereinabove. Thus, the problems associated with such a prior art method are avoided.

Although with the embodiment described above, a synthetic resin material which is hardened by ultra-violet radiation is employed, it would be equally possible to utilize a synthetic resin material which is hardened by the application of heat.

It can therefore be understood from the above description that with the method of manufacture of the present invention, data recording discs can be manufactured which can be extremely thin, yet are free from warping, and that the manufacturing process is highly efficient, enabling reductions in manufacturing costs to be attained.

**Claims**

1. A method of manufacturing data recording discs, comprising the steps of:

depositing a specific amount of a hardening type of synthetic resin, in liquid form, upon a face of a master disc (1) having a surface pattern upon said face, said master disc (1) being transparent to a specific form of radiation energy;

sandwiching said synthetic resin between said master disc (1) and a flat plate (3), said flat plate (3) being transparent to said radiation energy, and applying force acting on said flat plate, to form a thin layer (2) of said resin;

performing hardening processing of said layer (2) of synthetic resin on both sides thereof by exposing said sides to radiation energy (4, 5) passed through said master disc (1) and said flat plate (3) to thereby form said synthetic resin layer (2) into a base disc (6);

separating said base disc (6) from said master disc (1) with the flat plate (3) remaining attached thereto and with said surface pattern copied upon a copy face of said base disc (6) from said master disc (1);

forming a recording medium layer (9) of a material suitable for producing a reflective surface upon said copy face of said base disc (6); characterized by

depositing a specific amount of said hardening type of synthetic resin, in liquid form, upon said recording medium layer (9);

placing a second flat plate (3′) upon said synthetic resin, said second flat plate (3′) being transparent to said radiation energy, and applying force to said second flat plate (3′), to form said synthetic resin into a flat layer (2′);

performing hardening processing of said synthetic resin layer (2′) from both sides thereof by exposing said sides to said radiation energy through said first flat plate (3) and said second flat plate (3′), to thereby form said synthetic resin into a protective layer (11) and so form a structure comprising said recording medium layer (9) sandwiched between said protective layer (11) and said base disc (6);

separating said sandwich-configuration structure from said first and second flat plates (3, 3′) and

machining said sandwich-configuration structure into a predetermined disc shape.

2. A method of manufacturing data recording discs according to claim 1, and further comprising a step of masking specific regions of said copy face of said base disc (6) immediately prior to said step of forming said recording medium layer (9) thereon.

3. A method of manufacturing data recording discs according to claim 1, in which said synthetic resin employed to form said base disc (6) and said protective layer (11) is hardened by the action of ultra-violet radiation, and in which said master disc (1) and said first and second flat plates (3, 3′) are transparent to ultra-violet radiation, with said step of hardening said synthetic resin to form said base disc (6) comprising the directing of ultra-violet radiation through said master disc (1) and said first flat plate (3), and said step of hardening said synthetic resin to form said protective layer (11) comprising the directing of ultra-violet radiation through said first flat plate (3) and said second flat plate (3′).

**Patentansprüche**

1. Verfahren zur Herstellung von Datenaufzeichnungsplatten mit den folgenden Schritten:

Absetzen einer bestimmten Menge eines härtbaren Kunstharzes in flüssiger Form auf einer Fläche einer Matrizenplatte (1), die auf dieser Fläche ein Oberflächenmuster aufweist, wobei die Matrizenplatte (1) für eine bestimmte Form von Strahlungsenergie durchlässig ist;

schichtweises Anordnen des Kunstharzes zwischen der Matrizenplatte (1) und einer flachen Platte (3), wobei die flache Platte (3) für die erwähnte Strahlungsenergie durchlässig ist, und Ausüben einer Kraft, die auf die flache Platte einwirkt, um eine dünne Schicht (2) aus dem Harz zu bilden;

Durchführen einer Härtungsbehandlung der Schicht (2) aus Kunstharz an beiden Seiten der Schicht, indem die erwähnten Seiten Strahlungsenergie (4, 5) ausgesetzt werden, die durch die Matrizenplatte (1) und durch die flache Platte (3) hindurchgegangen ist, wodurch aus der Kunstharzschicht (2) eine Grundplatte (6) gebildet wird;

Abtrennen der Grundplatte (6) von der Matrizenplatte (1), wobei die flache Platte (3) an der Grundplatte (6) haftenbleibt und wobei das Oberflächenmuster von der Matrizenplatte (1) auf eine Kopiefläche der Grundplatte (6) kopiert worden ist; und

Bilden einer Datenträgerschicht (9) aus einem zum Herstellen einer reflektierenden Oberfläche geeigneten Material auf der Kopiefläche der Grundplatte (6); dadurch gekennzeichnet, daß

auf der Datenträgerschicht (9) eine bestimmte Menge des härtbaren Kunstharzes in flüssiger Form abgesetzt wird;

eine zweite flache Platte (3′), die für die erwähnte Strahlungsenergie durchlässig ist, auf das Kunstharz aufgesetzt wird und auf die zweite flache Platte (3′) eine Kraft ausgeübt wird, um aus dem Kunstharz eine flache Schicht (2') zu bilden;

eine Härtungsbehandlung der Kunstharzschicht (2') von beiden Seiten dieser Schicht durchgeführt wird, indem die erwähnten Seiten durch die erste flache Platte (3) und durch die zweite flache Platte (3') der Strahlungsenergie ausgesetzt werden, wodurch aus dem Kunstharz eine Schutzschicht (11) gebildet wird und so eine Struktur gebildet wird, die die Datenträgerschicht (9) aufweist, die schichtweise zwischen der Schutzschicht (11) und der Grundplatte (6) angeordnet ist;

die erwähnte Dreischichtenstruktur von der ersten und der zweiten flachen Platte (3, 3') abgetrennt wird und

die erwähnte Dreischichtenstruktur zu einer festgelegten Platten- bzw. Scheibenform bearbeitet wird.

2. Verfahren zur Herstellung von Datenaufzeichnungsplatten nach Anspruch 1, das ferner einen Schritt umfaßt, bei dem unmittelbar vor dem Schritt des Bildens der Datenträgerschicht (9) auf der Kopiefläche der Grundplatte (6) bestimmte Bereiche der Kopiefläche maskiert bzw. abgedeckt werden.

3. Verfahren zur Herstellung von Datenaufzeichnungsplatten nach Anspruch 1, bei dem das Kunstharz, das verwendet wird, um die Grundplatte (6) und die Schutzschicht (11) zu bilden, durch die Wirkung von Ultraviolettstrahlung gehärtet wird und bei dem die Matrizenplatte (1) und die erste und die zweite flache Platte (3, 3') für Ultraviolettstrahlung durchlässig sind, wobei bei dem Schritt des Härtens des Kunstharzes zum Bilden der Grundplatte (6) Ultraviolettstrahlung durch die Matrizenplatte (1) und durch die erste flache Platte (3) hindurchgerichtet wird und bei dem Schritt des Härtens des Kunstharzes zum Bilden der Schutzschicht (11) Ultraviolettstrahlung durch die erste flache Platte (3) und durch die zweite flache Platte (3') hindurchgerichtet wird.

## Revendications

1. Procédé pour fabriquer des disques d'enregistrement de données, comportant les étapes suivantes:

la déposition d'une quantité spécifique d'un type durcissable de résine synthétique, sous forme liquide, sur une face d'un disque maître (1) ayant un motif de surface sur ladite face, ledit disque maître (1) étant transparent à une forme spécifique d'énergie de rayonnement;

le fait d'intercaler ladite résine synthétique entre ledit disque maître (1) et une plaque plane (3), ladite plaque plane (3) étant transparente à ladite énergie de rayonnement, et l'application d'une force agissant sur ladite plaque plane, de façon à former une couche fine (2) de ladite résine;

la réalisation d'un processus de durcissage de ladite couche (2) de résine synthétique sur les deux côtés de celle-ci en exposant lesdits côtés à une énergie de rayonnement (4, 5) traversant ledit disque maître (1) et ladite plaque plane (3) afin de donner par conséquent à ladite couche (2) de résine synthétique la forme d'un disque de base (6);

la séparation dudit disque de base (6) dudit disque maître (1), la plaque plane (3) restant fixée à celui-ci, et ledit motif de surface étant copié sur une face de copie dudit disque de base (6) à partir dudit disque maître (1);

la formation d'une couche (9) de milieu d'enregistrement en un matériau approprié pour produire une surface réfléchissante sur ladite face de copie dudit disque de base (6); caractérisé par

la déposition d'une quantité spécifique dudit type durcissable de résine synthétique, sous forme liquide, sur ladite couche (9) de milieu d'enregistrement;

le fait de disposer une deuxième plaque plane (3') sur ladite résine synthétique, ladite deuxième plaque plane (3') étant transparente à ladite énergie de rayonnement, et l'application d'une force à ladite deuxième plaque plane (3'), afin de donner une forme de couche plane (2') à ladite résine synthétique;

la réalisation d'un processus de durcissage de ladite couche (2') de résine synthétique à partir des deux côtés de celle-ci en exposant lesdits côtés à ladite énergie de rayonnement à travers ladite première plaque plane (3) et ladite deuxième plaque plane (3'), afin de donner par conséquent une forme de couche protectrice (11) à ladite résine synthétique et de former par conséquent une structure comprenant ladite couche (9) de milieu d'enregistrement intercalée entre ladite couche protectrice (11) et ledit disque de base (6);

la séparation de ladite structure à configuration intercalée desdites première et deuxième plaques planes (3, 3') et

l'usinage de ladite structure à configuration intercalée en une forme de disque prédéterminée.

2. Procédé pour fabriquer des disques d'enregistrement de données selon la revendication 1, et comportant de plus une étape de masquage de régions spécifiques de ladite face de copie dudit disque de base (6) immédiatement avant ladite étape de formation de ladite couche (9) de milieu d'enregistrement sur celles-ci.

3. Procédé pour fabriquer des disques d'enregistrement de données selon la revendication 1, dans lequel ladite résine synthétique employée pour former ledit disque de base (6) et ladite couche protectrice (11) est durcie sous l'action de rayonnements ultraviolets, et dans lequel ledit disque maître (1) et lesdites première et deuxième plaques planes (3, 3') sont transparents au rayonnement ultraviolet, ladite étape de durcissage de ladite résine synthétique pour former ledit disque de base (6) comportant le fait de diriger le rayonnement ultraviolet à travers ledit disque maître (1) et ladite première plaque plane (3), et ladite étape de durcissage de ladite résine synthétique pour former ladite couche protectrice (11) comportant le fait de diriger le rayonnement ultraviolet à travers ladite première plaque plane (3) et ladite deuxième plaque plane (3').

*FIG.1a*

*FIG.1b*

*FIG.1c*

*FIG.1d*

*FIG.1e*